# EUROPÄISCHE PATENTSCHRIFT

(11) **EP 2 113 758 B1**
(45) Veröffentlichungstag und Bekanntmachung des Hinweises auf die Patenterteilung: **03.04.2013**
(21) Anmeldenummer: 09005983.3
(22) Anmeldetag: 30.04.2009
(51) Int. Cl.: G01L 3/14, G01D 5/20, G01L 3/10

(54) **Drehmomentsensor mit Telemetriesystem**
Torque sensor with telemetry system
Capteur de couple à système de télémétrie

(30) Priorität: 30.04.2008 DE 102008021774
(43) Veröffentlichungstag der Anmeldung: 04.11.2009
(73) Patentinhaber: Hottinger Baldwin Messtechnik GmbH, 64293 Darmstadt (DE)
(72) Erfinder: Würfl, Norbert, 63834 Sulzbach (DE); Nold, Werner, 64560 Riedstadt (DE); Andrae, Jürgen, 64331 Weiterstadt (DE); Bertrams, Andreas, 64354 Reinheim (DE)
(74) Vertreter: Staudte, Ralph

(56) Entgegenhaltungen:
- EP-A2- 1 074 826
- EP-A2- 1 296 438
- DE-C1- 4 430 503
- JP-A- 57 059 444

## Beschreibung

Die Erfindung betrifft einen Drehmomentsensor nach dem Oberbegriff des Patentanspruchs 1.

An rotierenden Maschinen ist es häufig notwendig, während des Betriebes deren Drehmomente zu überwachen oder zu erfassen. Dazu werden insbesondere Drehmomente von rotierenden Wellen gemessen, bei denen die Drehmomentaufnehmer synchron mit der Welle umlaufen und das durch die Welle übertragene Drehmoment gemessen wird. Hierfür werden häufig mit Dehnungsmessstreifen bestückte Drehmomentaufnehmer eingesetzt, die von stationären Geräteteilen mit Messenergie versorgt werden müssen und bei denen die gewonnenen Messwerte vom rotierenden Drehmomentaufnehmer wieder zu den stationären Geräteteilen übertragen werden sollen. Zur berührungslosen Übertragung derartiger Messwerte und Energie können induktive Telemetriesysteme eingesetzt werden, die über ein rotierendes und ein stationäres Antennenteil verfügen, wobei das rotierende Antennenteil oft axial mit der Drehmomentmesswelle verschraubt ist. Bei diesen Telemetriesystemen ist in jedem gegenüberliegend angeordneten Antennenteil mindestens eine Induktionsspule vorgesehen, wobei die Induktionsspulen induktiv über einen schmalen Luftspalt miteinander gekoppelt sind und so die elektrischen Signale berührungslos übertragen.

Ein derartiger rotierender Drehmomentsensor ist aus der EP 1 074 826 B1 bekannt. Dabei besteht der Drehmomentsensor im Wesentlichen aus zwei axial gegenüberliegend beabstandeten, ringförmigen Befestigungsflanschen mit gleichen Außendurchmessern, die zur Drehmomentein- und -ausleitung dienen. Die beiden Befestigungsflansche sind durch ein Momentenübertragungselement miteinander verbunden. Dabei ist das Momentenübertragungselement wie ein kurzes geschlossenes Rohrstück ausgebildet, in das symmetrisch zur Drehachse drei axiale taschenförmige Ausnehmungen eingearbeitet sind, die in diesen Bereichen die Rohrwandstärke schwächen und drei Messfederelemente darstellen. Auf den beiden gegenüberliegenden Mantelflächen der taschenförmigen Ausnehmungen sind symmetrisch zur Drehachse jeweils zwei Dehnungsmessstreifen in Form von Scherkraftaufnehmern appliziert. Bei einer Belastung mit einem Drehmoment treten an den geschwächten Ausnehmungen Dehnungen auf, die in den Dehnungsmessstreifen eine Widerstandsänderung hervorrufen, die dem übertragenen Drehmoment proportional ist. Zur Übertragung der Messenergie für die Dehnungsmessstreifen und die Rückübertragung der Messsignale von dem rotierenden Drehmomentaufnehmer auf eine stationäre elektronische Auswertevorrichtung wird in der Praxis meist axial zum Drehmomentsensor eine Schleifringvorrichtung oder eine berührungslos arbeitende Telemetrievorrichtung vorgesehen, wodurch sich das Drehmomentmesssystem mindestens axial verlängert.

Aus der DE 39 22 556 C2 ist ein derartiges Telemetriesystem bekannt, das mit einer induktiven Übertragung arbeitet. Dabei wird die zur Messung notwendige Energie mittels einer Trägerfrequenzspannung auf den Messsensor übertragen, auf die dann in einer Sensorschaltung die Messsignale moduliert und wieder zurückübertragen werden. Dazu ist sowohl eine Transponderspule notwendig, die mit dem Messsensor verbunden ist, als auch eine Empfängerspule, die stationär an einer Auswerteschaltung angeschlossen ist. Dabei müssen sich zur induktiven Übertragung die beiden Induktionsspulen berührungslos durch einen Luftspalt getrennt gegenüberstehen, so dass die Transponderspule einen Teil einer Rotorantenne und die Empfängerspule einen Teil einer Statorantenne darstellt. Eine spezielle Ausgestaltung der beiden Antennenteile und wie diese insbesondere mit einem rotierenden Drehmomentsensor verbunden werden könnten, ist aus dieser vorgenannten Anmeldung nicht bekannt.

Aus der DE 10 2005 040 794 A1 ist ein induktives Telemetriesystem bekannt, bei dem Messwerte von einem Rotor einer Gasturbine auf einen stationären Geräteteil und die dazu notwendige Energie in umgekehrter Richtung berührungslos übertragen werden. Dazu ist am stationären Geräteteil ein axial hervorstehender Trägerring angeordnet, in dem eine Statorspule befestigt ist. Axial gegenüberliegend zum Stator ist vor dem Trägerring der Rotor angeordnet, an dessen äußeren Rand ein auskragender Ringsteg angebracht ist, der koaxial in den Innenbereich des Statorantennenrings eintaucht und einen Rotorantennenring bildet. In der inneren Mantelfläche des Rotorantennenrings ist eine Induktionsspule als Rotorspule in einer rechteckigen u-förmigen Nut eingelassen, die der Statorspule im Abstand eines Luftspaltes gegenübersteht. Die Rotorspule ist mit dem am Rotor befestigten Messwertaufnehmer und einer Messelektronik verbunden, so dass während des Rotorbetriebs die Messsignale und die Messenergie berührungslos übertragbar sind. Da die Induktionsspule bei diesem Telemetriesystem in der inneren Mantelfläche des Rotorantennenrings eingelassen ist, muss sie den Statorantennenring radial von außen umgreifen, wodurch sich das Messwellensystem insgesamt verlängert. Dabei hat insbesondere ein derart auskragender Ringsteg bei hohen Drehzahlen den Nachteil, dass wegen der hohen Zentrifugalkräfte im Ringsteg Festigkeitsprobleme auftreten können.

Aus der DE 44 30 503 C1 ist ein Messflansch zur Messung eines Drehmoments bekannt, bei dem Messwerte von einem rotierenden Teil des Messflansches auf einen Statorteil mittels eines Telemetriesystems übertragen werden. Der Messflansch enthält dabei an einer axialen Seite eine Flanschscheibe, in deren äußerer Ringmantelfläche eine umlaufende rechteckige Nut eingelassen ist, in der eine Induktionsspule zur Speisung der Messelektronik und zur Übertragung der Messwerte befestigt ist. Radial gegenüberliegend zur Ringmantelfläche ist ein Statorteil angeordnet, an dem eine weitere Induktionsspule befestigt ist. Dabei sind beide Induktionsspulen durch einen Luftspalt voneinander beabstandet, über den die Wechselspannungsspeisung und die Messwerte induktiv und berührungslos übertragbar sind. Da die rotierende Induktionsspule in einer nach außen offenen Nut an der äußeren Ringmantelfläche befestigt ist, unterliegt sie bei hohen Drehzahlen einer hohen Fliehkraftbelastung, durch die sich die Induktionsspule bei Überschreitung einer kritischen Drehzahl aus der Befestigung in der Nut lösen kann.

Der Erfindung liegt daher die Aufgabe zu Grunde, einen Drehmomentsensor derart zu verbessern, dass es durch die Übertragung der Speiseenergie und der Messsignale nicht zu einer räumlichen Vergrößerung der Messeinrichtung kommt und dass die Betriebssicherheit auch bei hohen Rotordrehzahlen gewährleistet bleibt.

Diese Aufgabe wird durch die im Patentanspruch 1 angegebene Erfindung gelöst. Weiterbildungen und vorteilhafte Ausführungsbeispiele der Erfindung sind in den abhängigen Ansprüchen angegeben.

Die Erfindung hat den Vorteil, dass durch die besondere Integration der Rotorantenne in den Drehmomentsensor ein kompakter, insbesondere kurzer Drehmomentsensor geschaffen wurde, dessen Festigkeit sich auch bei Nenndrehzahlen von 20.000 bis 50.000 Umdrehungen pro Minute nicht nachteilig verändert, da der Antennenteil zentrifugalkraftsicher in einem Anschlussflansch befestigt ist und auch sonst über keine zusätzlichen Geräteteile verfügt, durch die die Zentrifugalkräfte und Schwingbelastungen erhöht werden könnten oder die den Sensor verlängern würden.

Die Erfindung hat weiterhin den Vorteil, dass durch die Integration des Antennenteils eine äußere Verdrahtung zwischen dem Drehmomentsensor und dem übertragenden Antennenteil entbehrlich ist, wodurch ein hermetisch abgeschlossener Drehmomentinnenteil erreichbar ist. Dabei wurde insbesondere durch die besondere Ausbildung der umlaufenden Nut eine besondere Haltbarkeit innerhalb der Nut erreicht, die auch bei extrem hohen Zentrifugalkräften und Schwingbelastungen ein Ablösen des Antennenteils vom Anschlussring verhindert.

Bei einer besonderen Ausführung der Erfindung wird durch die umlaufenden Entlastungsnuten in beiden Anschlussringen eine Entkopplung parasitärer Belastungen von den Applikationsstellen der Scherkraftaufnehmer erreicht, wodurch vorteilhafterweise mit geringem Aufwand eine hohe Messgenauigkeit erzielbar ist. Des Weiteren wurde durch die radial umlaufende Zwischennut zwischen den beiden Anschlussringen ein einfaches Messfederelement erreicht, durch das vorteilhafterweise eine besonders kurze und robuste Bauform ermöglicht wird.

Eine weitere besondere Ausführung mit einem verschraubten geschlossenen Sensorinnenraum hat den Vorteil, dass die gesamte Sensorelektronik inklusive der Verdrahtung und Übertragung durch den eingeschmolzenen Antennenteil hermetisch abgedichtet angeordnet ist, so dass dieser Drehmomentsensor auch bei ungünstigen Betriebs- und Umgebungsbedingungen dauerhaft und betriebssicher einsetzbar ist.

Die Erfindung wird anhand eines Ausführungsbeispiels, das in der Zeichnung dargestellt ist, näher erläutert. Es zeigen:
- Fig. 1:: eine Schnittdarstellung durch einen Drehmomentsensor mit integrierter Rotorantenne, und
- Fig. 2:: eine Schnittdarstellung durch den Querschnitt eines Rotorantennenrings.

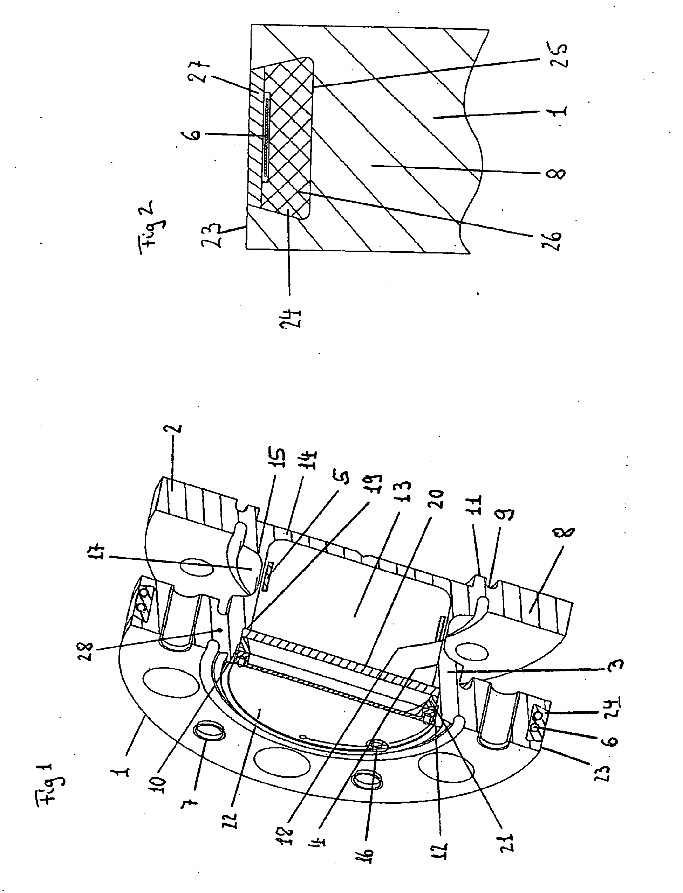

In Fig. 1 der Zeichnung ist ein Drehmomentsensor im Schnitt dargestellt, der aus zwei axial gegenüberliegend beabstandeten ringförmigen Anschlussflanschen 1,2 besteht, die durch ein rohrförmiges Momentenübertragungselement 3 miteinander starr verbunden sind, auf dessen geschwächter innerer Mantelfläche 4 Scherkraftaufnehmer 5 appliziert sind, wobei in einem ersten Anschlussflansch 1 eine Induktionsspule 6 eines Rotorantennenteils integriert ist.

Der dargestellte Drehmomentsensor ist zur Messung von Drehmomenten zwischen zwei Wellen mit einer Nenndrehzahl von 25.000 Umdrehungen pro Minute und einem Nenndrehmoment von 1 kNm vorgesehen. Dazu werden die Wellen zur Drehmomentein - und -ausleitung mit den beiden Anschlussflanschen 1,2 über die daran befindlichen Gewindebohrungen 7 verschraubt. Die beiden Anschlussflansche 1,2 sind dabei ringförmig ausgebildet und besitzen vorzugsweise einen etwa gleichgroßen Durchmesser von 150 mm und stellen jeweils einen ersten Anschlussring 1 und einen zweiten Anschlussring 2 dar. Derartige Drehmomentsensoren werden vorzugsweise auch mit kleineren Nenndrehmomenten von 200 Nm bei einem Ringdurchmesser von 80 mm und Nenndrehzahlen von 35.000 Umdrehungen pro Minute in vergleichbarer Ausbildung ausgeführt.

Bei der dargestellten Ausführung ist der erste Anschlussring 1 aus einem massiven Vollmaterial, vorzugsweise einer rostfreien Edelstahllegierung, gefertigt. Dieser besitzt einen kreisrunden Außenumfang und einen etwa rechteckigen Ringquerschnitt, an dessen innerer Ringmantelfläche 10 zwei gegenüberliegende Entlastungsnuten 9 axial eingefräst sind. Die Entlastungsnuten 9 sind dafür vorgesehen, dass die Applikationsstelle der Dehnungsmessstreifen in Form von Scherkraftaufnehmern 5 von parasitären Belastungen entkoppelt wird. Koaxial zu den Entlastungsnuten 9 ist im ersten Anschlussring 1 radial innenliegend noch ein schmaler Innenring 11 angebracht, an dessen innerer Mantelfläche ein Innengewinde 12 eingeschnitten ist, das zum Verschließen des hohlen Sensorinnenraums 13 dient.

Der zweite Anschlussring 2 enthält ebenfalls zwei gleichartige gegenläufige Entlastungsnuten 9 und einen gleichartigen Innenring 11, ist aber auf seiner inneren Ringmantelfläche 10 durch eine Abdeckplatte 14 hermetisch dicht verschlossen.

Beide axial parallel angeordnete Anschlussringe 1,2 sind im Bereich ihrer Innenringe 11 durch ein rohrförmiges geschlossenes Zwischenstück 15 miteinander verbunden, das das Momentenübertragungselement 3 darstellt. Das Zwischenstück 15 ist innen als kurzes Rohr mit einer geradlinigen inneren Mantelfläche 3 ausgeführt. Axial zwischen den beiden Anschlussringen 1,2 ist das Zwischenstück 15 mit einer nach innen abgerundeten umlaufenden Zwischennut 17 versehen, die etwa axial in der Mitte zwischen den Anschlussringen 1,2 einen umlaufenden, geschwächten Bereich ausbildet. Dieser stellt ein Messfederelement 18 dar, auf dessen innerem Umfang mindestens 4 um 90° verteilte Scherkraftaufnehmer 5 appliziert sind.

Am Endbereich der geradlinigen inneren Mantelfläche 4 ist im ersten Anschlussring 1 eine Innendurchmesser-Erweiterung mit ringförmiger Anschlagfläche 19 eingearbeitet, in der eine kreisrunde Schaltungsplatine 20 eingepasst ist, auf der eine Messelektronikschaltung verschaltet ist und die mit den Anschlüssen der Scherkraftaufnehmer 5 verdrahtet ist. Zum Abdichten des mit der Schaltungsplatine 20 versehenen Sensorinnenraums 13 ist noch ein Schraubdeckel 22 vorzugsweise aus einem rostfreien Edelstahlblech vorgesehen, der nach einem zusätzlichen Druckring 21 in das Innengewinde 12 des ersten Anschlussrings 1 eingeschraubt ist. Dabei ist die Breite des Druckrings 21 aus abdichtendem Kunststoff so bemessen, dass er die Schaltungsplatine fest im ersten Anschlussring 1 fixiert, so dass diese auch bei hohen Messdrehzahlen bis 25.000 Umdrehungen pro Minute bei einer Ausführung oder einer anderen Ausführung mit 35.000 Umdrehungen pro Minute nicht beschädigt werden kann.

Durch den Schraubdeckel 22 und den abdichtenden Druckring 21 ist der Sensorinnenraum 13 gegenüber äußeren Einflüssen hermetisch dicht verschlossen. Damit sich dieser nicht lockern kann, ist zusätzlich noch eine Verdrehsicherung 16 in Form einer Bohrung oder Gewindebohrung am Deckelrand und im Gewindebereich vorgesehen, in die vorzugsweise eine kleine Gewindeschraube zur Arretierung eingesetzt wird. Die hermetische Abdichtung ist auch dadurch möglich, dass die Messelektronikschaltung über eine radiale, nicht dargestellte Bohrung im ersten Anschlussring 1 mit der integrierten Rotorantenne verschaltet ist.

Zur Aufnahme der Rotorantenne ist im ersten Anschlussring 1 diese als Rotorantennenring ausgebildet und in dessen äußerer Mantelfläche 23 eine Induktionsspule 6 zur berührungslosen Übertragung einer trägerfrequenten Messenergiespannung und der darauf modulierten Drehmomentmesssignale vorgesehen. Die Induktionsspule 6 ist dazu in einer umlaufenden, schwalbenschwanzförmigen Nut 24 eingeschmolzen, so dass sich auch bei den enorm hohen Zentrifugalkräften und Schwingbelastungen bei Nenndrehzahlen des Drehmomentsensors von 25.000 bis 35.000 Umdrehungen pro Minute die Induktionsspule 6 nicht aus ihrer Verankerung lösen kann.

Die Anordnung der Induktionsspule 6 innerhalb des ersten Anschlussrings 1 ist dabei im Einzelnen in Fig. 2 der Zeichnung dargestellt. Dabei ist die Induktionsspule 6 in die umlaufende schwalbenschwanzförmige Nut 24 eingegossen, wobei zu deren Befestigung zunächst auf eine innere Nutmantelfläche 25 eine Grundwicklung 26 eines vorimprägnierten glasfaserverstärkten Gewebebandes (Prepreg-Band) in den auf 150°C erhitzten ersten Anschlussring 1 vorzugsweise mit hoher Zugkraft aufgewickelt wird, so dass sich das Gewebeband mit der inneren Mantelfläche 25 des ersten Anschlussrings 1 klebend verbindet. Diese Grundwicklung 26 wirkt für die nachfolgende Induktionsspule 6 gleichzeitig gegenüber dem metallenen ersten Anschlussring 1 elektrisch isolierend, so dass eine weitere Isolationsschicht zwischen dem Kupferdraht der Induktionsspule 6 und dem Anschlussring 1 entbehrlich ist.

Auf diese angeschmolzene Grundwicklung 26 wird dann die Induktionsspule 6 in Form der Kupferdrahtwicklung mit etwa 10 bis 200 umlaufenden Windungen gewickelt. Darauf wird dann eine weitere Schicht mehrerer Lagen des glasfaserverstärkten, vorimprägnierten Gewebebandes in auf 150°C erhitztem Zustand als Abdeckwicklung 27 aufgewickelt. Dabei wird die Abdeckwicklung 27 in einer Stärke aufgetragen, dass die Nut 24 zur äußeren Mantelfläche 23 des ersten Anschlussrings 1 mindestens plan abgedeckt ist. Ist dies nicht gewährleistet, so kann bei einer besonderen Ausbildung dieses Verfahrens die Nut 24 auch zusätzlich mit einem Glasfasergewebe bewickelt und mit einem Epoxydharz unter Vakuum vergossen werden.

Danach wird das Ganze zur Polymerisierung einen bestimmten Zeitraum von vorzugsweise 60 Minuten in einem Ofen auf konstanter Temperatur (z.B. 150°C) gehalten. Die so verschmolzene Abdeckwicklung 27 wird anschließend nach dem Aushärten auf der äußeren Mantelfläche 23 plan abgedreht, so dass eine feste mechanisch belastbare Verbindung zwischen der Induktionswicklung 6 und dem Anschlussring 1 als Träger erreicht wird. Da ein derartiger Einschmelzvorgang der Induktionsspule 6 durch einen zeitlich begrenzten Erhitzungsvorgang erfolgt, ist ein derartiger Rotorantennenteil schnell ausgehärtet und dadurch in kürzester Zeit herstellbar.

Als geeignete umlaufende Nut 24 ist nicht nur eine schwalbenschwanzförmige Ausbildung denkbar, sondern alle Formgebungen, deren Breite an der inneren Nutmantelfläche 25 größer ist als die Nutbreite an der äußeren Mantelfläche 23. Dabei haben sich in der Praxis Nutbreiten an der inneren Nutmantelfläche 25 von 6 bis 11 mm und Nuttiefen von 2 bis 5 mm als vorteilhaft erwiesen.

Der vorstehend beschriebene Drehmomentsensor weist folgende Wirkungsweise auf:

Der Drehmomentsensor wird im Betriebszustand mit seinen Anschlussflanschen 1,2 zwischen ein krafteinleitendes Wellenende und ein kraftaufnehmendes Wellenende geschraubt. Dabei wird dieser so angeordnet, dass der erste Anschlussflansch bzw. erste Anschlussring 1 mit seiner integrierten Induktionsspule 6 vorzugsweise koaxial innerhalb eines Statorantennenrings umläuft, der über einen Luftspalt von der äußeren Mantelfläche 23 des ersten Anschlussrings 1 beabstandet ist und ebenfalls eine Induktionswicklung enthält. Dabei wird zunächst die Messenergie in Form einer hochfrequenten Wechselspannung vom Statorantennenring induktiv auf die Induktionsspule 6 im ersten Anschlussring 1 übertragen.

Beim Antrieb der Welle mit einem Drehmoment entsteht im Messfederelement 18 eine geringe Dehnung, die durch die Dehnungsmessstreifen als Scherkraftaufnehmer 5 in eine Widerstandsänderung umgewandelt wird. Dabei sind die Scherkraftaufnehmer 5 zu einer Wheatstoneschen Brückenschaltung verschaltet, durch die die Widerstandsänderung in eine proportionale Spannungsänderung umgewandelt wird. Diese Spannungssignale werden am Drehmomentsensor verstärkt und nachfolgend digitalisiert. Die digitalen Drehmomentsignale werden dann induktiv und bidirektional von der Induktionsspule 6 auf die Statorspule eines Statorantennenrings übertragen. Zur Weiterverarbeitung werden die Drehmomentsignale dann einer Auswertevorrichtung zugeführt, an deren Ausgang das erfasste Drehmoment anzeigbar oder weiterverarbeitbar ist.

## Patentansprüche

1. Drehmomentsensor mit zwei Anschlussringen (1,2) zum Ein - und Ausleiten von Drehmomenten, die über mindestens ein Momentenübertragungselement (3) miteinander verbunden sind, wobei das Momentenübertragungselement (3) mindestens einen geschwächten als Messfederelement (18) ausgebildeten Bereich aufweist, auf dem Scherkraftaufnehmer (5) appliziert sind, und ein erster Anschlussring (1) als Rotorantennenring mit einer Induktionsspule (6) für ein induktives Telemetriesystem ausgebildet ist, wobei in der äußeren Mantelfläche (23) des ersten Anschlussrings (1) eine umlaufende Nut (24) vorgesehen ist, **dadurch gekennzeichnet, dass** die Nut (24) sich radial nach innen verbreitert und dass die Induktionsspule (6) zwischen zwei Wicklungslagen (26,27) eines vorimprägnierten oder umgossenen Kunststoff- oder Glasfasergewebebandes eingeschmolzen ist.

2. Drehmomentsensor nach Anspruch 1, **dadurch gekennzeichnet, dass** die umlaufende Nut (24) schwalbenschwanzförmig ausgebildet ist.

3. Drehmomentsensor nach Anspruch 1 oder 2, **dadurch gekennzeichnet, dass** die Induktionsspule (6) aus etwa 10 bis 200 Windungen Kupferdraht besteht, die zwischen einer Grundwicklung (26) eines vorimprägnierten Glasfasergewebebandes und einer Abdeckwicklung (27) aus ebenfalls einem vorimprägnierten Glasfasergewebeband so eingeschmolzen sind, dass die umlaufende Nut (24) vollständig und plan zur äußeren Mantelfläche (23) ausgefüllt ist.

4. Drehmomentsensor nach einem der vorhergehenden Ansprüche, **dadurch gekennzeichnet, dass** der erste Anschlussring (1) und der zweite Anschlussring (2) axial beabstandet und durch ein kurzes axiales Momentenübertragungselement (3) miteinander verbunden sind, wobei das Momentenübertragungselement (3) als kurzes rohrförmiges und geschlossenes Zwischenstück (15) ausgebildet ist, dessen radiale Mittelfläche durch eine umlaufende Nut (17) geschwächt ist und ein Messfederelement (18) darstellt, auf dessen innerer Mantelfläche (4) die Scherkraftaufnehmer (5) appliziert sind.

5. Drehmomentsensor nach einem der vorhergehenden Ansprüche, **dadurch gekennzeichnet, dass** radial innenliegend zum ersten Anschlussring (1) und zweiten Anschlussring (2) jeweils axial zwei entgegengerichtete Entlastungsnuten (9) eingelassen sind, die die beiden Anschlussringe (1,2) von den radial dazu innenliegenden beiden Innenringen (11) bis auf einen radialen Steg (28) voneinander trennen.

6. Drehmomentsensor nach Anspruch 5, **dadurch gekennzeichnet, dass** im Innenbereich des ersten Anschlussrings (1) im Bereich der inneren Ringmantelfläche (10) des Innenrings (11) eine ringförmige Anschlagfläche (19) angebracht ist, in die eine kreisrunde Schaltungsplatine (20) für eine Messelektronik eingepasst ist.

7. Drehmomentsensor nach Anspruch 6, **dadurch gekennzeichnet, dass** im ersten Anschlussring (1) auf der inneren Ringmantelfläche (10) des Innenrings (11) ein Innengewinde (12) angebracht ist, in das nach einem Druckring (21) ein Schraubdeckel (22) zur Fixierung der Schaltungsplatine (20) und zur hermetischen Abdichtung des Sensorinnenraums (13) dicht eingeschraubt ist.

8. Drehmomentsensor nach Anspruch 7, **dadurch gekennzeichnet, dass** zur Fixierung des Schraubdeckels (22) in dessen Randbereich und der inneren Ringmantelfläche (10) eine Verdrehsicherung (16) als Steck- oder Schraubelement angebracht ist.

## Claims

1. Torque sensor having two joining rings (1,2) for passing in and passing out torques, which are connected together through at least one torque transmitting element (3), wherein the torque transmitting element (3) comprises at least one diminished area formed as a measuring spring element (18) and having shear force sensors (5) arranged on it, and a first joining ring (1) is formed as a rotor antenna ring with an induction coil (6) for an inductive telemetry system, wherein a circumferential recess (24) is provided in the outer lateral surface (23) of the first joining ring (1), **characterized in that** the recess (24) increases in width in an inwardly radial direction and the induction coil (6) is fused between two winding layers (26,27) of a pre-impregnated or cast-in plastic or fibre glass fabric tape.

2. Torque sensor according to claim 1, **characterized in that** the circumferential recess (24) has a dovetail shape.

3. Torque sensor according to claim 1 or 2, **characterized in that** the induction coil (6) is made of about 10 to 200 turns of copper wire, which are fused between a base winding (26) of a pre-impregnated fibre glass fabric tape and a cover winding (27) of also a pre-impregnated fibre glass fabric tape so that the circumferential recess (24) is completely filled up to the outer lateral surface (23) and is flush with it.

4. Torque sensor according to any of the preceding claims, **characterized in that** the first joining ring (1) and the second joining ring (2) are axially spaced from each other and connected together through a short axial torque transmitting element (3), wherein the torque transmitting element (3) is formed as a short tubular and closed spacer (15), with the central cross section thereof being diminished in radial direction by a circumferential recess (17) to form a measuring spring element (18), on the inner lateral surface (4) of which the shear force sensors (5) are arranged.

5. Torque sensor according to any of the preceding claims, **characterized in that** the first joining ring (1) and the second joining ring (2) radially inside thereof are respectively provided with two relieving recesses (9) in axial direction, which are opposite to each other and leave a radial ridge (28) only between the respective joining ring (1,2) and its inner ring (11) radially inside thereof.

6. Torque sensor according to claim 5, **characterized in that** in the inner area of the first joining ring (1) an annular stop face (19) is provided in the area of the inside ring lateral surface (10) of the inner ring (11), into which a circular circuit board (20) for measuring electronic elements is inserted.

7. Torque sensor according to claim 6, **characterized in that** in the first joining ring (1) a female thread (12) is provided on the inside ring lateral surface (10) of the inner ring (11), into which a screw cap (22) is tightly screwed for fixing the circuit board (20) through a pressure ring (21) and sealing hermetically the sensor internal space (13).

8. Torque sensor according to claim 7, **characterized in that** for fixing the screw cap (22) an anti-twisting element (16) in the form of a safety bolt or screw element is provided in the marginal area thereof and the inside ring lateral surface (10).

## Revendications

1. Capteur de couple avec deux anneaux de raccordement (1,2) pour engager et désengager des couples, lesquels sont reliés entre eux par au moins un élément de transmission de couple (3), dans lequel l'élément de transmission de couple (3) comprend au moins une zone affaiblie formée comme un élément de ressort de mesure (18) et sur laquelle sont appliqués des capteurs de force de cisaillement (5), et un premier anneau de raccordement (1) est réalisé sous forme d'anneau d'antenne de rotor avec une bobine à induction (6) pour un système inductif de télémétrie, dans lequel une rainure périphérique (24) est prévue dans la surface d'enveloppe (23) extérieure du premier anneau de raccordement (1), **caractérisé en ce que** la rainure (24) s'élargit vers l'intérieur dans le sens radial et la bobine à induction (6) est noyée entre deux couches d'enroulement (26,27) d'un ruban de tissu pré-imprégné ou surmoulé en matière plastique ou en fibre de verre.

2. Capteur de couple selon la revendication 1, **caractérisé en ce que** la rainure périphérique (24) est en forme de queue d'aronde.

3. Capteur de couple selon la revendication 1 ou 2, **caractérisé en ce que** la bobine à induction (6) se compose d'environ 10 à 200 tours de fil de cuivre, lesquels sont noyés entre un enroulement de base (26) d'un ruban de tissu en fibre de verre pré-imprégné et un enroulement de couverture (27) provenant également d'un ruban de tissu en fibre de verre pré-imprégné de sorte que la rainure périphérique (24) est complètement remplie jusqu'à la surface d'enveloppe (23) extérieure avec qui elle est au même niveau.

4. Capteur de couple selon l'une quelconque des revendications précédentes, **caractérisé en ce que** le premier anneau de raccordement (1) et le deuxième anneau de raccordement (2) sont axialement espacés et reliés entre eux par un élément de transmission de couple (3) axial et court, dans lequel l'élément de transmission de couple (3) est sous forme de raccord (15) tubulaire court et fermé dont la surface centrale en direction radiale est réduite par une rainure périphérique (17) et représente un élément de ressort de mesure (18), sur la surface d'enveloppe (4) intérieure duquel sont appliqués des capteurs de force de cisaillement (5).

5. Capteur de couple selon l'une quelconque des revendications précédentes, **caractérisé en ce que** sont axialement disposées deux rainures de décharge (9), lesquelles sont opposées entre elles et se trouvent à l'intérieur dans une direction radiale vis-à-vis du premier anneau de raccordement (1) et du deuxième anneau de raccordement (2) respectivement, lesquelles séparent les deux anneaux de raccordement (1,2) l'un de l'autre à partir des deux anneaux intérieurs (11) qui se trouvent à l'intérieur dans une direction radiale vis-à-vis d'elles et jusqu'à une arête (28) radiale.

6. Capteur de couple selon la revendication 5, **caractérisé en ce que**, dans la région intérieure du premier anneau de raccordement (1), une surface de butée (19) annulaire est disposée dans la région de la surface d'enveloppe annulaire (10) intérieure de l'anneau intérieur (11), dans laquelle est placée une carte de circuit (20) circulaire pour un système électronique de mesure.

7. Capteur de couple selon la revendication 6, **caractérisé en ce que**, dans le premier anneau de raccordement (1), un filetage femelle (12) est disposé sur la surface d'enveloppe annulaire (10) intérieure de l'anneau intérieur (11), dans lequel un couvercle à vis (22) est solidement vissé à travers une vis de pression (21) pour fixer la carte de circuit (20) et fermer hermétiquement le volume intérieur de capteur (13).

8. Capteur de couple selon la revendication 7, **caractérisé en ce que**, pour la fixation du couvercle à vis (22), un élément de blocage en rotation (16) sous la forme d'un élément enfichable ou d'un élément à vis est disposé dans une zone de bordure de celui-ci et dans la surface d'enveloppe annulaire (10) intérieure.
